# EUROPEAN PATENT APPLICATION

(11) **EP 4 009 301 A2**
(43) Date of publication of application: **08.06.2022**
(21) Application number: 21217957.6
(22) Date of filing: 28.12.2021
(51) Int. Cl.: G08G 1/01, B60R 1/00, G06V 20/54, G08G 1/04, G08G 1/0967

(54) **ROAD SIDE SERVICE UNIT, TRAFFIC PROMPT DEVICE, TRAFFIC PROMPT SYSTEM AND METHOD**

(30) Priority: 23.02.2021 CN 202110202532
(71) Applicant: Beijing Baidu Netcom Science and Technology Co., Ltd., Beijing 100085 (CN)
(72) Inventor: HU, Xing, Beijing 100085 (CN); ZHANG, Haiyong, Beijing 100085 (CN); ZHENG, Siyi, Beijing 100085 (CN); WANG, Kun, Beijing 100085 (CN); YANG, Jialin, Beijing 100085 (CN); LI, Geng, Beijing 100085 (CN); QIU, Miaohan, Beijing 100085 (CN); ZHAO, Heming, Beijing 100085 (CN)
(74) Representative: Hoffmann Eitle

(57) **Abstract**

The present disclosure provides a roadside service unit, a traffic prompt device, a traffic prompt system and a traffic prompt method, relating to a field of computer technology, in particular to a field of vehicle networking and intelligent transportation technologies. The roadside service unit includes: a roadside acquisition device configured to provide a traffic data; a roadside computing device communicatively connected with the roadside acquisition device, and configured to generate a traffic prompt information according to the traffic data provided by the roadside acquisition device; and a roadside communication device communicatively connected with the roadside computing device, and configured to send the traffic prompt information generated by the roadside computing device to a preset area.

## Description

### TECHNICAL FIELD

The present disclosure relates to a field of computer technology, in particular to a field of vehicle networking and intelligent transportation technologies, and specifically to a roadside service unit, a traffic prompt device, a traffic prompt system and a method.

### BACKGROUND

When a vehicle is traveling, it is often unable to accurately obtain traffic information ahead due to obstructions. For example, large vehicles such as buses and trucks are prone to poor air visibility due to traffic lights, traffic signs, vehicles ahead and pedestrians on the road, or due to weather such as rain, snow or fog, so that vehicles may not determine traffic conditions ahead, which may easily cause traffic jams, red light running and even traffic accidents.

### SUMMARY

The present disclosure provides a roadside service unit, a traffic prompt device, a traffic prompt system and a method.

According to one aspect of the present disclosure, a roadside service unit is provided, including:
a roadside acquisition device configured to provide a traffic data;
a roadside computing device communicatively connected with the roadside acquisition device, and configured to generate a traffic prompt information according to the traffic data provided by the roadside acquisition device; and
a roadside communication device communicatively connected with the roadside computing device, and configured to send the traffic prompt information generated by the roadside computing device to a preset area.

According to another aspect of the present disclosure, a traffic prompt device is provided, including:
a communication component configured to receive a traffic prompt information sent by the roadside service unit as described above;
a processor connected to the communication component and configured to generate a display data according to the traffic prompt information received;
a display connected to the processor and configured to display according to the display data generated by the processor.

According to another aspect of the present disclosure, a traffic prompt system is provided, including:
a roadside service unit including a roadside acquisition device, a roadside computing device and a roadside communication device, wherein the roadside acquisition device and the roadside communication device are communicatively connected with the roadside computing device, the roadside acquisition device is configured to provide a traffic data, the roadside computing device is configured to generate a traffic prompt information according to the traffic data provided by the roadside acquisition device, and the roadside communication device is configured to send the traffic prompt information generated by the roadside computing device to a preset area; and
a traffic prompt device including a communication component, a processor and a display, wherein the communication component and the display are connected to the processor, the communication component is configured to receive the traffic prompt information sent by the roadside communication device of the roadside service unit, the processor is configured to generate a display data according to the traffic prompt information received, and the display is configured to display according to the display data generated by the processor.

According to another aspect of the present disclosure, a traffic prompt method executed by the traffic prompt system as described above, including:
obtaining a traffic data by a roadside acquisition device of a roadside service unit, generating a traffic prompt information by a roadside computing device of the roadside service unit according to the traffic data provided by the roadside acquisition device, and sending by a roadside communication device of the roadside service unit the traffic prompt information generated by the roadside computing device to a preset area; and
receiving by a communication component of a traffic prompt device the traffic prompt information sent by the roadside communication device of the roadside service unit, generating a display data by a processor of the traffic prompt device according to the received traffic prompt information, and displaying by a display of the traffic prompt device according to the display data generated by the processor.

It should be understood that the contents described in this section are not intended to identify the critical or important features of the embodiments of the present disclosure, and is not intended to limit the scope of the disclosure. Other features of the present disclosure will be easily understood by the following description.

### BRIEF DESCRIPTION OF THE DRAWINGS

The drawings are used to better understand the solutions, and do not constitute a limitation to the present disclosure. Wherein:
FIG. 1 is a schematic diagram of a roadside service unit according to an embodiment of the present disclosure;
FIG. 2 is a schematic diagram of a roadside service unit according to another embodiment of the present disclosure;
FIG. 3 is a schematic diagram of a traffic prompt device according to an embodiment of the present disclosure;
FIG. 4 is a schematic diagram of a traffic prompt device according to another embodiment of the present disclosure;
FIG. 5 is a schematic diagram of a mobile public facility installed with a traffic prompt device according to the embodiments of the present disclosure;
FIGS. 6A to 6H are schematic diagrams of a display interface of a traffic prompt device according to the embodiments of the present disclosure;
FIG. 7 is a schematic diagram of a traffic prompt system according to an embodiment of the present disclosure;
FIG. 8 is a schematic diagram of a traffic prompt system according to another embodiment of the present disclosure;
FIG. 9 is a flowchart of a traffic prompt method executed by a traffic prompt system according to the embodiments of the present disclosure;
FIG. 10 is a scene diagram of a traffic prompt system that may implement the embodiments of the present disclosure;
FIG. 11 illustrates a schematic block diagram of an example electronic device 1100 that may be used to implement the embodiments of the present disclosure.

### DETAILED DESCRIPTION OF EMBODIMENTS

The following describes the exemplary embodiments of the present disclosure with reference to the drawings, which include various details of the embodiments of the present disclosure to facilitate understanding, and should be regarded as merely exemplary. Therefore, those skilled in the art should note that various changes and modifications may be made to the embodiments described herein without departing from the scope and spirit of the present disclosure. Likewise, for clarity and conciseness, descriptions of well-known functions and structures are omitted in the following description.

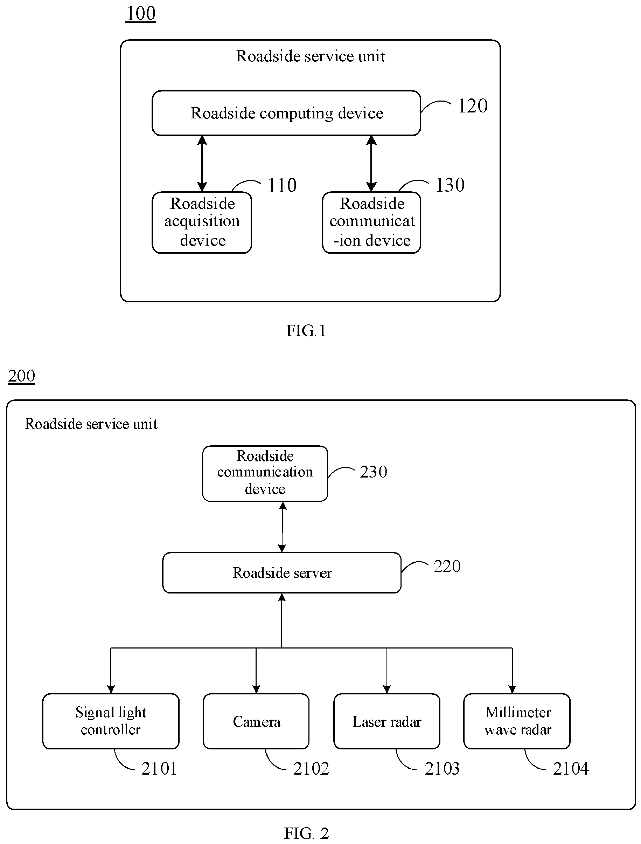

FIG. 1 is a schematic diagram of a roadside service unit according to an embodiment of the present disclosure.

As shown in FIG. 1, the roadside service unit 100 includes a roadside acquisition device 110, a roadside computing device 120 and a roadside communication device 130. The roadside computing device 120 is communicatively connected with the roadside acquisition device 110 and the roadside communication device 130, for example but not limited to by a wired connection and a wireless connection.

The roadside acquisition device 110 may obtain a traffic data and provide the traffic data to the roadside computing device 120. In some embodiments, the roadside acquisition device may include at least one of a traffic light controller, an image acquisition device, or a radar, which will be described in further detail below.

The roadside computing device 120 may generate a traffic prompt information according to the traffic data provided by the roadside acquisition device 110, and send the traffic prompt information to the roadside communication device 130. In some embodiments, the roadside computing device 120 may be any device with information processing capabilities, for example but not limited to a roadside server.

The roadside communication device 130 may send the traffic prompt information from the roadside computing device 120 to a preset area. The roadside communication device 130 may be designed as a communication device based on any suitable communication standard as required. In some embodiments, the roadside communication device 130 may be a roadside communication device based on the LTE-V2X standard, such as an LTE-V2X transceiver. V2X (Vehicle to Everything) communication technology is a technology that implements environmental perception, information interaction and collaborative control in the Internet of Vehicles. The LTE-V2X standard based on the Long Term Evolution (LTE) system is a comprehensive communication solution for vehicle-road collaboration, it may provide low-latency, high-reliability, high-speed and high-security communication capabilities to meet various application requirements for the Internet of Vehicles. However, the communication mode of the roadside communication device 130 is not limited to this. In other embodiments, the roadside communication device 130 may be a roadside communication device based on 4G standards, 5G standards or communication standards developed in the future.

FIG. 2 is a schematic diagram of a roadside service unit according to another embodiment of the present disclosure.

In FIG. 2, the roadside service unit 200 includes a roadside acquisition device, a roadside computing device and a roadside communication device, and the above description of the roadside acquisition device, the roadside computing device and the roadside communication device is also applicable to the roadside service unit in FIG. 2. The roadside acquisition device of the roadside service unit 200 may include at least one of a traffic light controller 2101, an image acquisition device (such as a camera 2102), or a radar (such as a laser radar 2103 and a millimeter wave radar 2104). The roadside computing device of the roadside service unit 200 may be a roadside server 220. The roadside communication device of the roadside service unit 200 may be a roadside communication device 230 based on the LTE-V2X standard, the 4G standard or the 5G standard.

The traffic light controller 2101 may obtain a control information for a preset traffic light from the traffic control center and provide the control information for the roadside server 220. The traffic light controller 2101 may be installed at the intersection, for example, the traffic light controller 2101 may be installed on the post at the intersection or the post of the traffic light. The traffic light controller 2101 may control one or more traffic lights, for example, one traffic light controller may be used to control eight traffic lights at a two-lane intersection, or one traffic light controller may be provided for each traffic light.

The camera 2102 may acquire a road image information. The camera 2102 may be installed at the intersection or the road section, for example, the camera 2102 may be installed on the crossbar or column at the intersection, or on a crossbar or column at two sides of the road section. The camera 2102 may capture an image of road within its field of view or an image of road of a designated area and send the image of road to the roadside server 220 as the road image information.

The laser radar 2103 and the millimeter wave radar 2104 may transmit a radar signal to the road and receive the returned radar signal, and provide the returned radar signal as a road radar information to the roadside server 220.

The roadside server 220 receives the control information for the traffic light from the traffic light controller 2101, the road image information from the camera 2102 and the road radar information from the laser radar 2103 and the millimeter wave radar 2104, and may generate a traffic prompt information according to at least one of the control information for the traffic light, the road image information, or the road radar information.

For example, for any one traffic light, the roadside server 220 may determine a state of the traffic light (such as the lighting state and a lighting time of red light, green light and yellow light) according to the control information for the traffic light, and generate a traffic prompt information indicating the state of the preset traffic light.

The roadside server 220 may also determine various road traffic conditions, for example but not limited to traffic congestion, the number of pedestrians crossing the street, estimated waiting time, vehicle queuing in each lane, road construction events, and road accidents, based on at least one of the control information for the traffic light from the traffic light controller 2101, the road image information from the camera 2102, or the road radar information from the laser radar 2103 and the millimeter wave radar 2104,. For example, the roadside server 220 may determine the number of queued vehicles in a certain lane according to the road image information acquired by the camera 2101 in real time, and determine the expected waiting time combined with the control information for the traffic light. For another example, the roadside server 220 may detect a road events, such as a road construction event or a road malfunction, based on the road image information combined with the road radar information. For each road traffic condition, the roadside server 220 may generate a traffic prompt information to indicate the road traffic condition, such as "estimated waiting time is 6 minutes" or "construction in first lane", etc., which will be described in further detail below.

Although in the above embodiment, taking the roadside acquisition device including the camera, the laser radar, the millimeter wave radar and the traffic light controller as an example for description, the embodiments of the present disclosure are not limited thereto. One or more of the roadside acquisition device above-mentioned may be omitted as required, or other types of roadside acquisition device may be added to the roadside acquisition device above-mentioned, for example but not limited to distance sensors, infrared sensors, and so on.

In some embodiments, the traffic light controller may not be needed, but the image acquisition device (such as the camera) may be used to acquire an image information of the traffic light. The roadside server may determine the state of the traffic light according to the image information of the traffic light. In other embodiments, the roadside server may directly obtain the control information for the traffic light from the traffic control center, and determine the state of the traffic light according to the control information for the traffic light from the traffic control center. After determining the state of the traffic light, the roadside server may generate the traffic prompt information indicating the state of the traffic light as described above. In this way, there is no need to modify the roadside traffic light facilities, so that the roadside service unit is easier to implement.

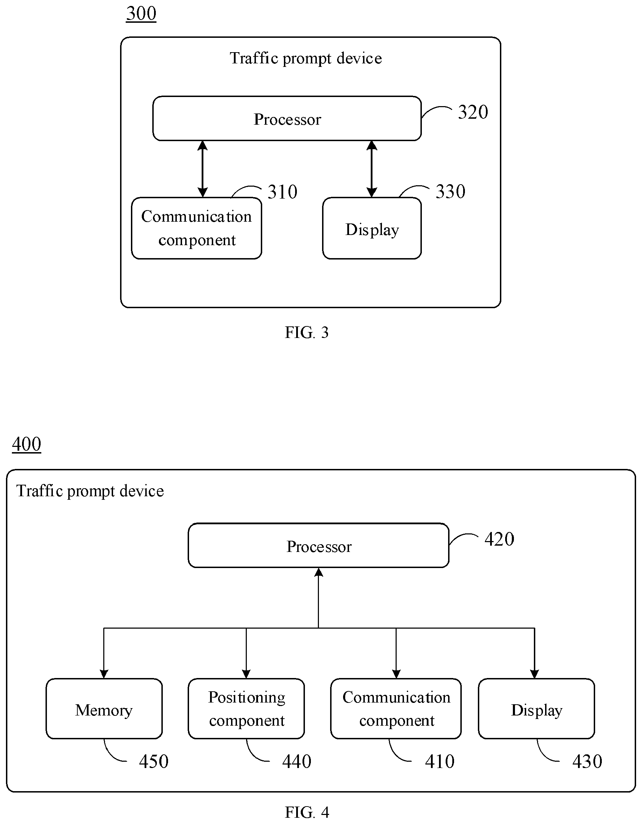

The roadside communication device 230 may be provided on roadside, being separated from the roadside server 220 and communicatively connected with the roadside server 220. In some embodiments, the roadside communication device 230 and the roadside server 220 may be integrated together. The roadside communication device 230 may broadcast the traffic prompt information to the communication coverage area of the roadside communication device 230 based on the LTE-V2X standard, 4G standard or 5G standard, so that a traffic prompt device in the communication coverage area receives and displays the traffic prompt information. The traffic prompt device will be described in detail below with reference to FIGS. 3 and 4.

FIG. 3 is a schematic diagram of a traffic prompt device according to an embodiment of the present disclosure. As shown in FIG. 3, the traffic prompt device 300 includes a communication component 310, a processor 320 and a display 330. The processor 320 is connected to the communication component 310 and the display 330.

The communication component 310 may receive the traffic prompt information sent by the roadside service unit above-mentioned (for example, the roadside service unit 100 or 200). For example, the communication component 310 may be based on the same communication standard as the roadside communication device of the roadside service unit. For example, the communication component 310 may be an LTE-V2X receiver, so as to receive the traffic prompt information sent by the LTE-V2X communication device of the roadside service unit.

The processor 320 generates a display data according to the traffic prompt information received by the communication component 310 and provides the display data to the display 330. The display 330 may display according to the display data generated by the processor. The processor 320 may convert the received traffic prompt information into the display data matched with the size and display mode of the display 330, so that the traffic prompt device 300 may be applicable for a variety of traffic prompt information, so as to have higher compatibility.

FIG. 4 is a schematic diagram of a traffic prompt device according to another embodiment of the present disclosure. The traffic prompt device 400 is similar to the traffic prompt device 300 above-mentioned, and the difference is at least that the traffic prompt device 400 further includes a positioning component 440 and a memory 450. In order to simplify the description, the different part will be mainly described in detail in the following.

As shown in FIG. 4, the traffic prompt device 400 includes a communication component 410, a processor 420, and a display 430. The above descriptions of the communication component 310, the processor 320 and the display 330 are respectively applicable to the communication component 410, the processor 420 and the display 430, which will not be repeated here.

In some embodiments, the traffic prompt device 400 may be installed on mobile public facilities such as buses, trucks, taxis and sweepers. In this way, the traffic prompt device 400 may further include the positioning component 440. The positioning component 440 may determine the location and the moving direction of a mobile public facility. The positioning component 440 may be a positioning component such as GPS inherently provided on the mobile public facility, or a positioning component provided additionally. The processor 420 may be connected with the positioning component 440 to obtain the location and moving direction of the mobile public facility, and determine whether the received traffic prompt information matches the mobile public facility according to the location and moving direction of the mobile public facility. If the received traffic prompt information matches the mobile public facility, the processor 420 generates a display data according to the traffic prompt information received and controls the display 430 to display; otherwise, the processor 420 does not execute the operation of generating the display data.

For example, the roadside service unit broadcasts the traffic prompt information to all public mobile facilities within the communication coverage area of the roadside service unit. These public mobile facilities may drive in different directions on different roads. By providing the positioning component, each traffic prompt device may determine the location and driving direction of the public mobile facility containing the traffic prompt device, in order to select, from the various traffic prompt information provided by the roadside service unit, the traffic prompt information related to the area that the mobile public facility is driving to, e.g. a state of a traffic light and a road congestion in front of public mobile facility in the travelling direction of public mobile facility.

Although the above-mentioned embodiments has been described by taking the installation of the traffic prompt device in the mobile public facility as an example, the embodiments of the present disclosure is not limited to this. The traffic prompt device may be installed in any suitable location, for example, the traffic prompt device may be installed on an non-mobile public facility such as a billboard, a bus stop sign, etc., so that a driver in a nearby vehicle may obtain the road condition in time accurately.

In some embodiments, the traffic prompt device 400 may further include the memory 450. The memory 450 may store various data and/or program instructions, for example, the memory 450 may store the traffic prompt information and program instructions executed by the processor 420 to implement data conversion.

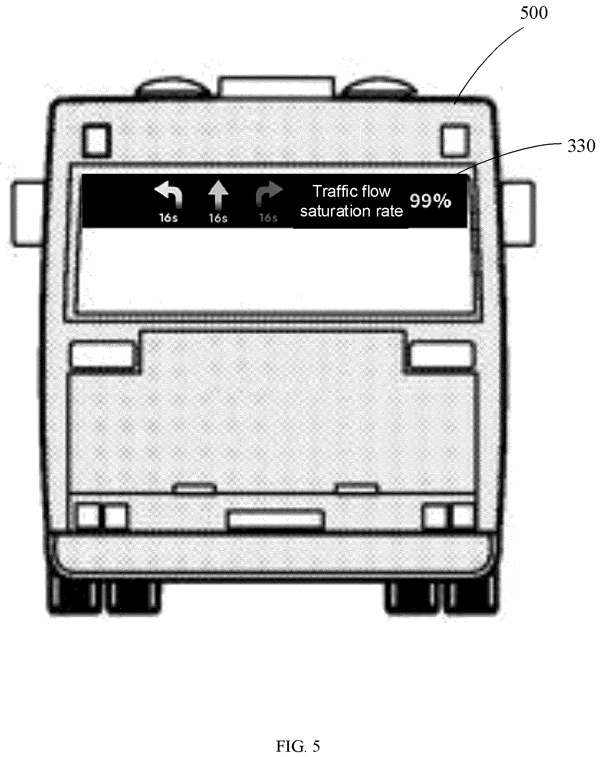

FIG. 5 is a schematic diagram of a mobile public facility installed with a traffic prompt device according to the embodiments of the present disclosure.

As shown in FIG. 5, the mobile public facility 500 is a bus, and the traffic prompt device of any of the above embodiments may be installed on the mobile facility 500. The display (for example, the display 330 of the traffic notification device 300 above-mentioned) of the traffic prompt device may be installed at a tail of the mobile public facility, so that people in the vehicle behind the mobile public facility may see the content displayed on the display. In FIG. 5, the display 330 of the traffic prompt device is installed on the windshield at the tail of the mobile public facility 500, which is located on the side away from the ground. The display 330 may be provided inside the mobile public facility 500 to reduce the risk of damage. Other components of the traffic prompt device, such as processor, communication components, positioning components and memory, may also be installed inside the mobile public facility 500. In some embodiments, the other components may be installed externally or embedded in the mobile public facility 500.

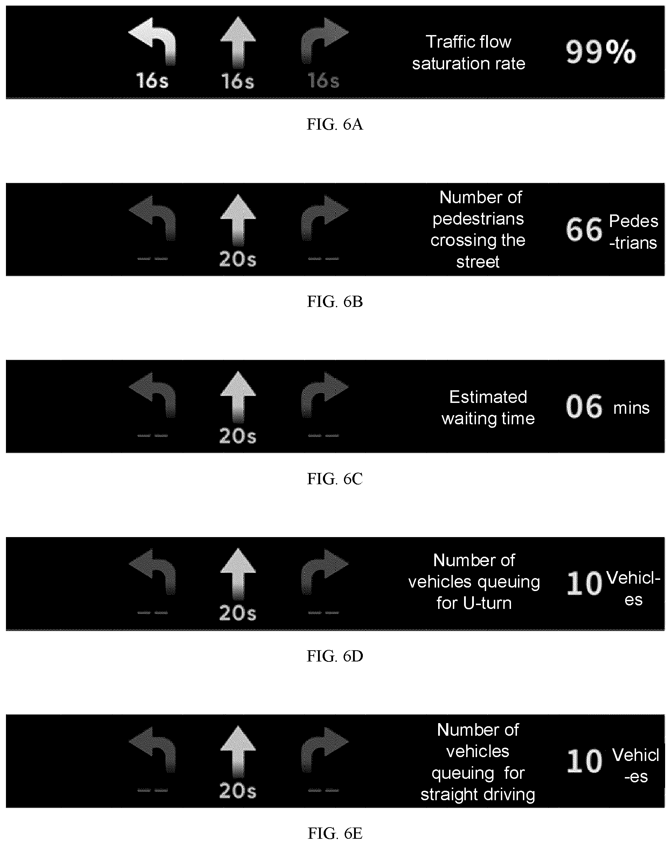

FIGS. 6A to 6H are schematic diagrams of a display interface of a traffic prompt device according to the embodiments of the present disclosure.

As shown in FIGS. 6A to 6H, the display interface of the traffic prompt device may include a first area and a second area. The first area (for example, the area on left) is used to display the state of the traffic light, and the second area (for example, the area on right) is used to display traffic conditions such as traffic participant information, traffic event information and traffic flow information.

As shown in FIG. 6A, suppose a road has three lanes, namely a left-turn lane, a straight lane and a right-turn lane. The roadside server determines the state of the traffic light of the road according to the control information for the traffic light of the road: the yellow light in the left-turn lane is on and goes out after 16 seconds; the green light in the straight lane is on and goes out after 16 seconds; the red light in the right-turn lane is on and goes out after 16 seconds. The roadside server also determines that the traffic flow saturation rate of the road is 99% based on the camera and the radar on the roadside, and the traffic flow saturation rate here may be the ratio between the actual traffic flow of vehicles on the road and the saturated traffic flow of the road. The roadside server generates and broadcasts two traffic prompt information, one of which indicates the state of traffic light of the road, and the other one indicates the traffic saturation rate of the road. The traffic prompt device located within the broadcast range of the roadside server (for example, the traffic prompt device installed on the bus that enters the range) may receive the two traffic prompt information, and control the display, control the display to display in the first area according to the traffic prompt information indicating the state of the traffic light: the yellow light in the left-turn lane is on and goes out after 16 seconds; the green light in the straight lane is on and goes out after 16 seconds; the red light in the right-turn lane is on and goes out after 16 seconds; and according to the traffic prompt information indicating the traffic flow saturation rate, the display is controlled to display in the second area: the traffic flow saturation rate is 99%.

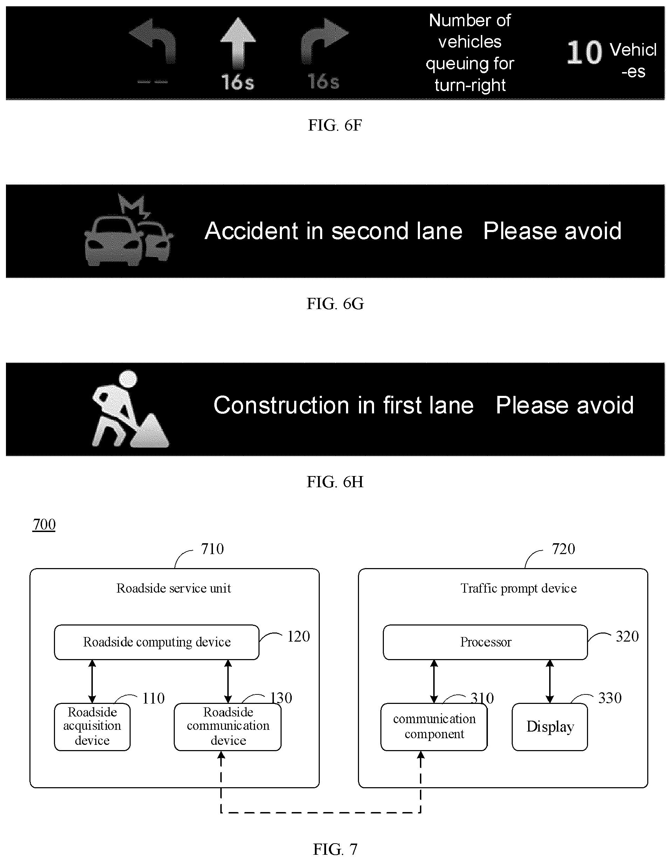

Similarly, the traffic prompt device may also display other road condition information according to the traffic prompt information broadcast by the roadside server, such as the number of pedestrians crossing the street (as shown in FIG. 6B), the estimated waiting time (as shown in FIG. 6C), the number of vehicles queuing for U-turn (as shown in FIG. 6D), the number of vehicles queuing for straight driving (as shown in FIG. 6E), the number of vehicles queuing for turn-right (as shown in FIG. 6F), the traffic accidents (as shown in FIG. 6G) and the construction conditions (as shown in Figure 6H). However, the embodiments of the present disclosure are not limited to this, and the traffic prompt device may display traffic-related content in any other form as required.

FIG. 7 is a schematic diagram of a traffic prompt system according to an embodiment of the present disclosure.

As shown in FIG. 7, the traffic prompt system includes a roadside service unit 710 and a traffic prompt device 720. The roadside service unit 710 may be implemented by the roadside service unit of any of the above-mentioned embodiments, for example, the roadside service unit 710 in FIG. 7 is implemented as having the same structure as the roadside service unit 100. The traffic prompt device 720 may be implemented by the traffic prompt device of any of the above-mentioned embodiments, for example, the traffic prompt device 720 in FIG. 7 is implemented as having the same structure as the traffic prompt device 300.

The roadside service unit 710 includes a roadside acquisition device 110, a roadside computing device 120 and a roadside communication device 130. The roadside acquisition device 110 and the roadside communication device 130 are communicatively connected with the roadside computing device 120. The roadside acquisition device 110 may provide a traffic data, the roadside computing device 120 may generate a traffic prompt information according to the traffic data provided by the roadside acquisition device 110, and the roadside communication device 130 may send the traffic prompt information generated by the roadside computing device 120 to a preset area.

The traffic prompt device 720 includes a communication component 310, a processor 320 and a display 330. The communication component 310 and the display 330 are connected to the processor 320. The communication component 310 may receive the traffic prompt information sent by the roadside communication device 730 of the roadside service unit 710, the processor 320 may generate a display data according to the traffic prompt information received, and the display 330 may display according to the display data generated by the processor.

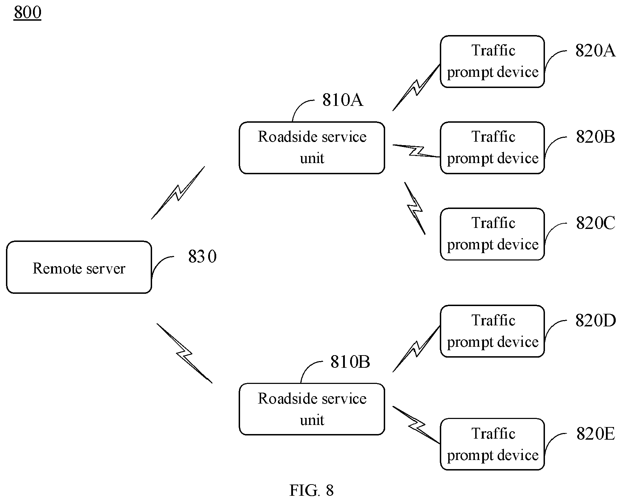

FIG. 8 is a schematic diagram of a traffic prompt system according to another embodiment of the present disclosure. The traffic prompt system 800 in FIG. 8 is similar to the traffic prompt system 700 above-mentioned, and the difference is at least that the traffic prompt system 800 includes a plurality of roadside service units. For ease of brevity, the difference will be mainly described in detail in the following.

As shown in FIG. 8, the traffic prompt system 800 includes a plurality of roadside service units 810A and 810B and a plurality of traffic prompt devices 820A to 820E. Each of roadside service units 810A and 810B may be implemented by the roadside service unit of any of the above-mentioned embodiments, and each of the traffic prompt devices 820A to 820E may be implemented by the traffic prompt device of any of the above-mentioned embodiments. In FIG. 8, the roadside service unit 810A may broadcast various traffic propt information to the traffic prompt devices 820A, 820B and 820C located in its communication coverage area, and each of the traffic prompt devices 820A, 820B, and 820C may select, from the received traffic prompt information, a content matched with the each of the traffic prompt devices 820A, 820B, and 820C for displaying. The roadside service unit 810B may broadcast various traffic prompt information to the traffic prompt devices 820D and 820E located in the communication coverage area of the roadside service unit 810B, and each of the traffic prompt devices 820D and 820E select from the traffic prompt information received a content matched with the each of the traffic prompt devices 820D and 820E for displaying.

In FIG. 8, the traffic prompt system 800 further includes a remote server 830, the remote server 830 may communicate with the roadside service units 810A and 820B, for example, may receive a traffic data from at least one of the roadside service units 810A and 820A, and manage the roadside service units 810A and 820B. The communication between the remote server 830 and the roadside service units 810A and 820B includes, but is not limited to, communication via the Internet or local area network. In some embodiments, the remote server 830 may also perform some analysis and processing operation with relatively low requirements in time effectiveness based on the traffic data, such as an analysis of overall road condition, a prediction of future road condition, and so on.

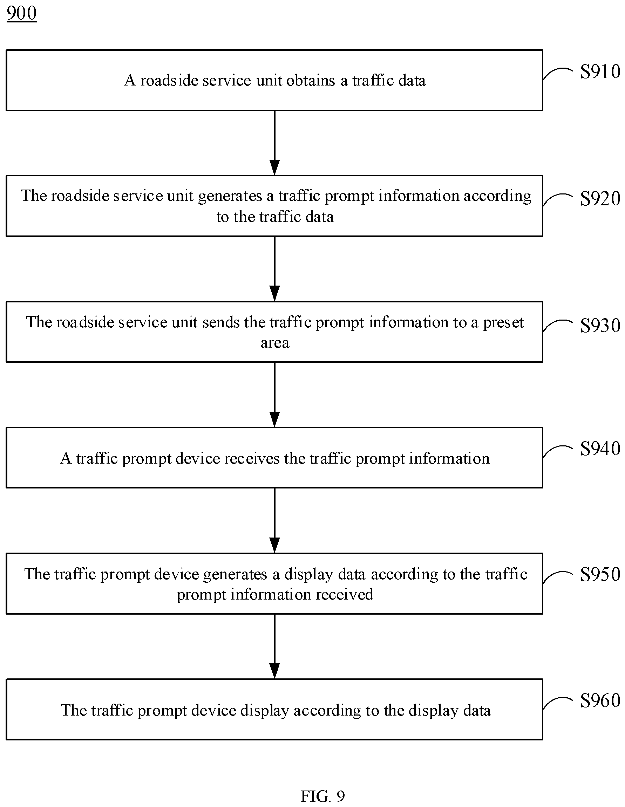

FIG. 9 is a flowchart of a traffic prompt method executed by a traffic prompt system according to the embodiments of the present disclosure.

In step S910, a roadside acquisition device of a roadside service unit obtains a traffic data.

In step S920, a roadside computing device of the roadside service unit generates a traffic prompt information according to the traffic data provided by the roadside acquisition device.

In step S930, a roadside communication device of the roadside service unit sends the traffic prompt information generated by the roadside computing device to a preset area.

In step S940, a communication component of a traffic prompt device receives the traffic prompt information sent by the roadside communication device of the roadside service unit.

In step S950, a processor of the traffic prompt device generates a display data according to the traffic prompt information received.

In step S960, a display of the traffic prompt device displays according to the display data generated by the processor.

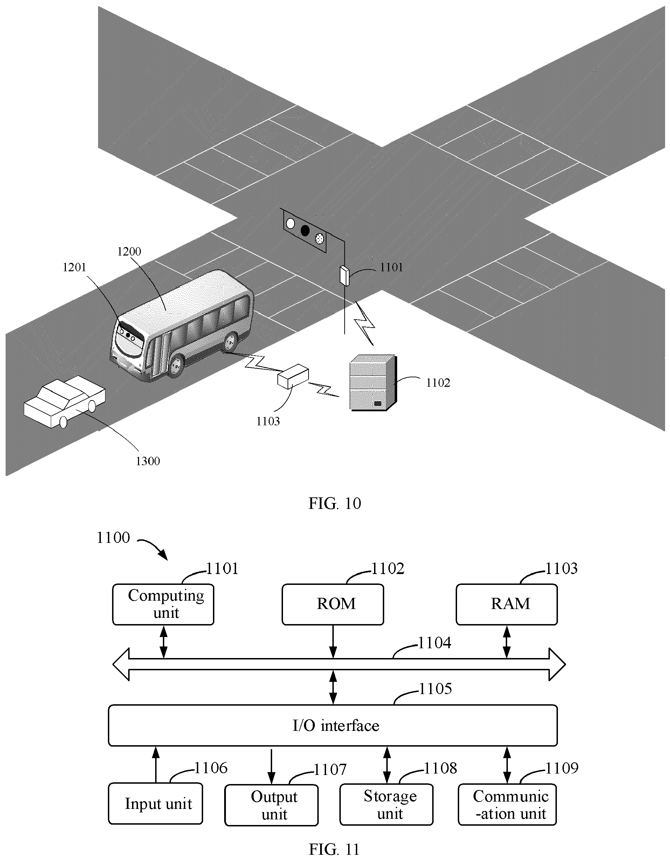

FIG. 10 is a scene diagram of a traffic prompt system that may implement the embodiments of the present disclosure.

As shown in FIG. 10, the traffic prompt system includes a roadside service unit, the roadside service unit includes a traffic light controller 1011, a roadside server 1012 and a roadside communication device 1013. The traffic light controller 1101 is installed on the traffic light bracket at the intersection, and the roadside server 1102 and the roadside communication device 1013 are provided on a side of the intersection. The traffic prompt system also includes a traffic prompt device installed on a bus 1020. A display 1201 of the traffic prompt device is installed on the windshield at a tail of the bus 1020.

When the system is working, the traffic light controller 1011 acquires a control information for the traffic light and provides the control information to the roadside server 1012. The roadside server 1012 generates a traffic prompt information indicating the state of the traffic light according to the control information, and broadcasts the traffic prompt information through the roadside communication device 1013.

When the bus 1020 enters the communication coverage area of the roadside communication device 1013, the traffic prompt device installed on the bus 1020 receives the traffic prompt information broadcast by the roadside communication device 1013, and displays the status of the traffic light on the display 1201 according to the traffic prompt information, which is consistent with the actual status of the traffic light. In this way, even if a person in the rear vehicle 1300 may not see the status of the traffic light due to the shielding of the traffic light by the bus 1020, the status of the traffic light may be obtained through the display 1201 at the tail of the bus 1020.

For ease of description, the above-mentioned embodiments only use the traffic light controller as the roadside acquisition device for illustration, but the embodiments of the present disclosure are not limited to this. The roadside server 1012 may obtain various traffic data from various roadside acquisition devices for analysis, processing and fusion as required, so as to determine various traffic conditions for prompting.

Collecting, storing, using, processing, transmitting, providing, and disclosing etc. of the personal information of the user involved in the present disclosure all comply with the relevant laws and regulations, and do not violate the public order and morals.

According to the embodiments of the present disclosure, the present disclosure also provides an electronic device, a readable storage medium and a computer program product.

FIG. 11 illustrates a schematic block diagram of an example electronic device 1100 that may be used to implement embodiments of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 11, the device 1100 includes a computing unit 1101, which may execute various appropriate actions and processing according to a computer program stored in a read only memory (ROM) 1102 or a computer program loaded from a storage unit 1108 into a random access memory (RAM) 1103. Various programs and data required for the operation of the device 1100 may also be stored in the RAM 1103. The computing unit 1101, the ROM 1102 and the RAM 1103 are connected to each other through a bus 1104. An input/output (I/O) interface 1105 is also connected to the bus 1104.

The I/O interface 1105 is connected to a plurality of components of the device 1100, including: an input unit 1106, such as a keyboard, a mouse, etc.; an output unit 1107, such as various types of displays, speakers, etc.; a storage unit 1108, such as a magnetic disk, an optical disk, etc.; and a communication unit 1109, such as a network card, a modem, a wireless communication transceiver, etc. The communication unit 1109 allows the device 1100 to exchange information/data with other devices through the computer network such as the Internet and/or various telecommunication networks.

The computing unit 1101 may be various general-purpose and/or special-purpose processing components with processing and computing capabilities. Some examples of computing unit 1101 include, but are not limited to, central processing unit (CPU), graphics processing unit (GPU), various dedicated artificial intelligence (AI) computing chips, various computing units that run machine learning model algorithms, digital signal processing DSP and any appropriate processor, controller, microcontroller, etc. The computing unit 1101 executes the various methods and processing described above, for example, the method and processing executed by the processor of the above-mentioned roadside computing device, the traffic prompt device or the remote server. For example, in some embodiments, the method may be implemented as computer software programs, which are tangibly contained in the machine-readable medium, such as the storage unit 1108. In some embodiments, part or all of the computer program may be loaded and/or installed on the device 1100 via the ROM 1102 and/or the communication unit 1109. When the computer program is loaded into the RAM 1103 and executed by the computing unit 1101, one or more steps of the method described above may be executed. Alternatively, in other embodiments, the computing unit 1101 may be configured to execute the above-mentioned method in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, load programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specified in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or device, or any suitable combination of the above-mentioned content. More specific examples of the machine-readable storage media would include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the corresponding computers and have a client-server relationship with each other. The server may be a cloud server, a server of a distributed system, or a server combined with a blockchain.

It should be understood that the various forms of processes shown above may be used to reorder, add or delete steps. For example, the steps described in the present disclosure may be executed in parallel, sequentially or in a different order, as long as the desired result of the technical solution disclosed in the present disclosure may be achieved, which is not limited herein.

The above-mentioned specific implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A roadside service unit (100), comprising:
a roadside acquisition device (110) configured to provide a traffic data;
a roadside computing device (120) communicatively connected with the roadside acquisition device, and configured to generate a traffic prompt information according to the traffic data provided by the roadside acquisition device; and
a roadside communication device (130) communicatively connected with the roadside computing device, and configured to send the traffic prompt information generated by the roadside computing device to a preset area.

2. The roadside service unit of claim 1, wherein,
the roadside acquisition device comprises a traffic light controller (2101);
the traffic data comprises a control information for a preset traffic light provided by the traffic light controller;
the roadside computing device is configured to determine a state of the preset traffic light according to the control information for the preset traffic light, and to generate a traffic prompt information indicating the state of the preset traffic light.

3. The roadside service unit of claim 1 or 2, wherein,
the roadside acquisition device comprises an image acquisition device (2102);
the traffic data comprises a road image information acquired by the image acquisition device;
the roadside computing device is configured to determine a road traffic condition according to the road image information, and to generate a traffic prompt information indicating the road traffic condition.

4. The roadside service unit of any one of claims 1 to 3, wherein,
the roadside acquisition device comprises a radar (2103, 2104);
the traffic data comprises a road radar information provided by the radar;
the roadside computing device is configured to determine a road traffic condition according to the radar image information, and to generate a traffic prompt information indicating the road traffic condition.

5. The roadside service unit of claim 3, wherein,
the traffic data further comprises an image information of a preset traffic light acquired by the image acquisition device;
the roadside computing device is further configured to determine a state of the preset traffic light according to the image information of the preset traffic light, and to generate a traffic prompt information indicating the state of the preset traffic light.

6. The roadside service unit of any one of claims 1 to 5, wherein,
the roadside acquisition device comprises a traffic light controller (2101), an image acquisition device (2102) and a radar (2103, 2104);
the traffic data comprises a control information for a preset traffic light provided by the traffic light controller (2101), a road image information acquired by the image acquisition device (2102) and a road radar information provided by the radar (2103, 2104);
the roadside computing device is configured to:
determining a state of the preset traffic light according to the control information for the preset traffic light, and generate a traffic prompt information indicating the state of the preset traffic light;
determining a road traffic condition according to at least one of the control information for the preset traffic light, the road image information, or the road radar information, and generate a traffic prompt information indicating the road traffic condition.

7. The roadside service unit of any one of claims 1 to 6, wherein the roadside communication device is a roadside communication device based on LTE-V2X, 4G or 5G standards, and the roadside communication device is configured to broadcast the traffic prompt information to the communication coverage area of the roadside communication device based on LTE-V2X, 4G or 5G standards.

8. A traffic prompt device (300), comprising:
a communication component (310) configured to receive a traffic prompt information sent by the roadside service unit of any one of claims 1 to 7;
a processor (320) connected to the communication component (310)and configured to generate a display data according to the traffic prompt information received;
a display (330) connected to the processor (320) and configured to display according to the display data generated by the processor (320).

9. The traffic prompt device of claim 8, wherein the traffic prompt device is installed on at least one of a mobile public facility and a non-mobile public facility.

10. The traffic prompt device of claim 9, wherein the traffic prompt device is installed on the mobile public facility (500), and the display (330) of the traffic prompt device is installed at a tail of the mobile public facility (500).

11. The traffic prompt device of claim 10, further comprising a positioning component connected to the processor, and configured to determine a position of the mobile public facility and a moving direction of the mobile public facility,
wherein the processor is configured to generate the display data according to the received traffic prompt information in response to determining that the received traffic prompt information matches the mobile public facility according to the position of the mobile public facility and the moving direction of the mobile public facility.

12. A traffic prompt system (700), comprising:
a roadside service unit (710) comprising a roadside acquisition device (110), a roadside computing device (120) and a roadside communication device (130), wherein the roadside acquisition device (110) and the roadside communication device (130) are communicatively connected with the roadside computing device (120), the roadside acquisition device (110) is configured to provide a traffic data, the roadside computing device (120) is configured to generate a traffic prompt information according to the traffic data provided by the roadside acquisition device (110), and the roadside communication device (130) is configured to send the traffic prompt information generated by the roadside computing device (120) to a preset area; and
a traffic prompt device (720) comprising a communication component (310), a processor (320) and a display (330), wherein the communication component (310) and the display (330) are connected to the processor (320), the communication component (310) is configured to receive the traffic prompt information sent by the roadside communication device (130) of the roadside service unit (710), the processor (320) is configured to generate a display data according to the traffic prompt information received, and the display (330) is configured to display according to the display data generated by the processor (320).

13. The traffic prompt system of claim 12, wherein the traffic prompt system comprises a plurality of roadside service units (810A, 810B), the traffic prompt system further comprises a remote server (830), and the remote server (830) is configured to receive the traffic data from at least one of the plurality of roadside service units (810A, 810B), and to manage the plurality of roadside service units (810A, 810B).

14. A traffic prompt method executed by the traffic prompt system of claim 12 or 13, comprising:
obtaining (S910) a traffic data by a roadside acquisition device of a roadside service unit, generating (S920) a traffic prompt information by a roadside computing device of the roadside service unit according to the traffic data provided by the roadside acquisition device, and sending (S930) by a roadside communication device of the roadside service unit the traffic prompt information generated by the roadside computing device to a preset area; and
receiving (S940) by a communication component of a traffic prompt device the traffic prompt information sent by the roadside communication device of the roadside service unit, generating (S950) a display data by a processor of the traffic prompt device according to the received traffic prompt information, and displaying (S960) by a display of the traffic prompt device according to the display data generated by the processor.
